# EUROPÄISCHE PATENTSCHRIFT

(11) **EP 1 329 648 B1**
(45) Veröffentlichungstag und Bekanntmachung des Hinweises auf die Patenterteilung: **07.11.2007**
(21) Anmeldenummer: 03000839.5
(22) Anmeldetag: 15.01.2003
(51) Int. Cl.: F16H 47/06

(54) **Lastschaltgetriebe mit hydrodynamischem und optionalem mechanischen Leistungspfad**
Powershift transmission with hydrodynamic and optional mechanical path
Transmission de changement de vitesse sous charge avec voie hydrodynamique et mécanique optionnelle

(30) Priorität: 17.01.2002 DE 10201590
(43) Veröffentlichungstag der Anmeldung: 23.07.2003
(73) Patentinhaber: ZF FRIEDRICHSHAFEN AG, 88038 Friedrichshafen (DE)
(72) Erfinder: Huber, Tilo, 94034 Passau (DE)

(56) Entgegenhaltungen:
- EP-A- 0 759 129
- WO-A-01/90600
- WO-A-96/18834
- DE-A1- 2 904 062
- DE-A1- 4 416 930
- DE-B- 1 053 326
- DE-B- 1 129 838
- US-A- 3 350 951
- US-A- 4 813 300
- US-A1- 2002 083 785

## Beschreibung

Die vorliegende Erfindung bezieht sich auf ein mehrgängiges Lastschaltgetriebe mit hydrodynamischem und optionalem mechanischen Leistungspfad, insbesondere ein solches mehrgängiges Lastschaltgetriebe als Wendegetriebe für Baumaschinen, gemäß dem Oberbegriff des Patentanspruchs 1.

Unter Last schaltbare Wendegetriebe werden in vielen verschiedenen Fahrzeugen der Baumaschinenbranche verwendet. Typische Anwendungsbeispiele sind der Einsatz in Gabelstaplern, Bagger- und Radladern, Telescopic-Handlern und auch in Kranfahrzeugen. Die Vielfalt der Fahrzeuge in diesem Bereich verlangt ein hohes Maß an Anpassungsfähigkeit des eingesetzten Getriebes, da die Einbau- und Einsatzbedingungen in den verschiedenen Fahrzeugen höchst unterschiedlich ausfallen können.

Beispielsweise kann der zur Verfügung stehende Einbauraum extrem klein ausfallen. Ferner können unterschiedliche Achsabstände zwischen der Getriebeantriebswelle und der Getriebeabtriebswelle auftreten. Je nach Fahrzeugtyp ist demnach ein bestimmter Achsversatz zwischen der Ein- und Ausgangswelle des Getriebes erforderlich. Weiter wird in den meisten Einsatzbereichen mindestens ein Nebenantrieb benötigt z. B. für die Hydraulik der Arbeitsmaschine. Die Aufgaben, die ein Wendegetriebe zu erfüllen hat, sind demnach bedingt durch die Bauart des Fahrzeugs sehr unterschiedlich. Diese Anforderungen müssen innerhalb der axialen Baulänge und Breite des Getriebes erfüllt werden. Eine zukünftige Anforderung an Lastschaltgetrieben mit hydrodynamischem Leistungspfad ist auch ein verbesserter Wirkungsgrad, vor allem bei Anwendungen mit hohen Fahranteilen. Ein zusätzlicher mechanischer Leistungspfad kann dafür in vielen Anwendungen eine Alternative zu einer oft aufwendigen Wandlerdurchkupplung sein.

Aus der US 6,186,029 B1 ist ein lastschaltbares Wendegetriebe bekannt, mit einem ersten Getriebeteil mit ersten und zweiten Antriebswellen und einer Abtriebswelle. Die erste Antriebswelle dieses Standes der Technik kann verbunden werden mit einem Pumpenantrieb eines Drehmomentwandlers, wohingegen die zweite Antriebswelle wahlweise verbunden werden kann mit einer Turbinen des Drehmomentwandlers, so dass mit schaltbaren Kupplungen getrennte Antriebswege über den Drehmomentwandler oder über einen direkten Durchtrieb von einem Motor zum Getriebeausgang gewählt werden können. Der Antriebsweg über den Turbinenabschnitt des Drehmomentwandlers ist als hydrodynamischer Leistungspfad und der Antriebsweg über den direkten Durchtrieb als mechanischer Leistungspfad bezeichnet. Ein zweiter Getriebeteil dieses Standes der Technik weist Kupplungen und Getriebelemente für unterschiedliche Vorwärts- und Rückwärtsgänge des lastschaltbaren Wendegetriebes auf. Dieses Getriebe des Standes der Technik kann auch als Retarder betrieben werden. Durch die Anordnung von Schaltkupplungen, Festrädern und Losrädern auf mehreren Vorgelegewellen dieses Standes der Technik können lange und kurz Achsabstände realisiert werden, wobei je nach gewünschtem Gang unterschiedliche Kombinationen von Vorgelegewellen an der Kraftübertragung beteiligt sind. Bei diesem Stand der Technik werden demnach zur Realisierung verschiedener Achsabstände sich voneinander unterscheidende Wellenanordnungen vorgesehen. Nachteilig bei diesem Stand der Technik ist jedoch die eingeschränke Flexibilität der Gangübersetzungen und der Gesamtübersetzung, wobei die Gesamtübersetzung insgesamt gering ist. Zudem läßt die Flexibilität der Achs-abstände, der Anordnung von An- und Abtrieb und des PTO zu wünschen übrig.

Die DE-2904062 offenbart ein Lastschaltgetriebe mit einem mechanischen und einem hydrodynamischen Leistungspfad, wobei der erste und zweite Gang über den hydrodynamischen Leistungszweig und der dritte Gang über den mechanischen Leistungszweig erfolgten. Aus WO 9 531 654 ist ein Lastschaltgetriebe mit der Merkmalen des Oberbegriffes des Anspruches 1 bekannt.

Aufgabe der vorliegenden Erfindung ist es, mit wenig Aufwand ein effizientes, mehrgängiges Lastschaltgetriebe mit hydrodynamischem und optionalem mechanischen Leistungspfad zu schaffen, das an verschiedene Einbausituationen angepaßt werden kann, dessen Anordnung der Wellen flexibel und damit zur Überbrückung verschiedener Achsabstände geeignet ist und das bei der Anpassung an eine bestimmte Einbausituation nur wenig zusätzliche Bauteile erfordert.

Die Lösung dieser Aufgabe erfolgt mit einem mehrgängigen Lastschaltgetriebe mit den Merkmalen des Patentanspruchs 1.

Erfindungsgemäß ist ein Lastschaltgetriebe mit hydrodynamischem und mechanischem Leistungspfad, insbesondere ein solches mehrgängiges Lastschaltgetriebe als Wendegetriebe für Baumaschinen vorgesehen. Mindestens eine Abtriebswelle und mehrere Vorgelegewellen mit auf diesen verteilten Losrädern, Festrädern und Schaltkupplungen bilden mehrere Vorgelegeeinheiten zur Gang- und Richtungsschaltung. Mindestens zwei Antriebswellen sind vorgesehen, wobei eine dieser Antriebswellen mit einem Turbinenabschnitt eines Drehmomentwandlers verbunden ist und zu dem hydrodynamischem Leistungspfad gehört und eine zweite Antriebswelle über den direkten Durchtrieb mit der Drehzahl eines Motors verbunden ist und zu dem wahlweise zuschaltbaren, mechanischem Leistungspfad gehört. Gemäß der Erfindung ist die Vorgelegeeinheit K4 als Gangsplitter ausgebildet, welche die Gangsprünge der Vorgelegeeinheiten K1, K2, K3 unterteilt, und koaxial auf den Antriebswellen angeordnet ist. Mit dem erfindungsgemäßen, konstruktiv einfachen Lastschaltgetriebe ist durch die Anordnung der Vorgelegeeinheit K4 auf den Antriebswellen die Teilezahl und damit der konstruktive Aufwand reduziert bei verbesserter Flexibilität der Gangübersetzungen und höherer Gesamtübersetzung gegenüber dem genannten Stand der Technik.

Gemäß der Erfindung werden die Unterschiede der Übersetzungen der Vorgelegeeinheiten K1, K2, K3 beim Betrieb über den optionalen mechanischen Leistungspfad von der Vorgelegeeinheit K4 unterteilt, so dass bei jedem Gangwechsel der Wechsel vom hydrodynamischem zum mechanischen Leistungspfad und umgekehrt erfolgt, wobei die Überschneidung zwischen den Übersetzungen des mechanischen und des hydrodynamischen Leistungspfads mit der Übersetzung der Vorgelegeeinheit K4 beliebig gewählt werden kann.

Während des Betriebs der Vorgelegeeinheit K4 ist der Turbinenabschnitt des Drehmomentwandlers von der Abtriebswelle getrennt, so daß Verluste aus dem Drehmomentwandler vermieden werden und der Wirkungsgrad des erfindungsgemäßen Lastschaltgetriebes verbessert ist.

Gemäß einer bevorzugten Ausführungsform der Erfindung weist das Lastschaltgetriebe koaxial zu den Antriebswellen einen Nebenabtrieb, beispielsweise einen PTO, auf. Vorzugsweise wird ein motorabhängiger Nebenabtrieb verwendet.

Die einzelnen Wellen des erfindungsgemäßen Lastschaltgetriebes sind zu einer Wendegetriebeeinheit KV, KR, K4 und einer Ganggetriebeeinheit K1, K2, K3 zusammengefasst, wobei die Wendegetriebeeinheit an einer beliebigen Seite der Antriebswelle vorgesehen ist und die Ganggetriebeeinheit an die Wendegetriebeeinheit anschließt, sodass die Wendegetriebeeinheit und die Gangetriebeeinheit bezogen auf die Antriebswelle hintereinander auf einer Seite der Abtriebswelle angeordnet sind. Die Gangetriebeeinheit schließt vorzugsweise an die Vorgelegeeinheit des Rückwärtsdgangs an.

Gemäß einer weiteren bevorzugten Ausführungsform der Erfindung treibt die Kupplung der Vorgelegeeinheit des vierten Gangs K4 über ein entkoppeltes Rad in die Konstante ein, so dass der Aufbau der Kupplungen der Vorgelegeeinheiten KV und KR prinzipiell identisch werden kann.

Die flexible Anordnung der Wellen kann erreicht werden, ohne die am Kraftfluß beteiligten Komponenten austauschen zu müssen. Somit ist ein Höchstmaß an Wiederverwendbarkeit von Komponenten gewährleistet.

Für Fahrzeuge, die von dem Getriebe die Überbrückung großer Distanzen zwischen An- und Abtrieb verlangen, kann eine lange Abstandsvariante vorgesehen werden, wie sie z. B. mit einem Achsverteilergetriebe verwirklicht werden kann.

Erfindungsgemäß ist zudem ein Lastschaltgetriebe mit hydrodynamischem Leistungspfad, insbesondere ein solches mehrgängiges Lastschaltgetriebe als Wendegetriebe für Baumaschinen vorgesehen. Mindestens eine Abtriebswelle und mehrere Vorgelegewellen mit auf diesen verteilten Losrädern, Festrädern und Schaltkupplungen bilden mehrere Vorgelegeeinheiten zur Gang- und Richtungsschaltung. Mindestens eine Antriebswelle ist vorgesehen, die mit einem Turbinenabschnitt eines Drehmomentwandlers verbunden ist und zu dem hydrodynamischem Leistungspfad gehört. Gemäß der Erfindung ist die Vorgelegeeinheit K4 als Gangsplitter ausgebildet, und ist koaxial auf den Antriebswellen angeordnet ist. Mit dem erfindungsgemäßen, konstruktiv einfachen Lastschaltgetriebe ist durch die Anordnung der Vorgelegeeinheit K4 auf den Antriebswellen die Teilezahl und damit der konstruktive Aufwand reduziert bei verbesserter Flexibilität der Gangübersetzungen und höherer Gesamtübersetzung gegenüber dem genannten Stand der Technik. Gemäß der Erfindung werden die Unterschiede der Übersetzungen der Vorgelegeeinheiten K1, K2, K3 beim Betrieb über den optionalen hydrodynamischen Leistungspfad von der Vorgelegeeinheit K4 unterteilt, wobei die Überschneidung zwischen den Übersetzungen mit der Übersetzung der Vorgelegeeinheit K4 beliebig gewählt werden kann.

Durch die vorliegende Erfindung ist es demnach möglich, auf verschiedenste Getriebeanforderungen einzugehen und mit einem Grundgetriebe auch eine Ausführung mit zusätzlichem mechanischen Leistungspfad darzustellen. Durch die Standardisierung und den einfachen Aufbau können Material und Kosten gespart werden. Wartung und Instandhaltung werden aufgrund der Standardisierung ebenfalls einfacher.

Im folgenden wird ein bevorzugtes Ausführungsbeispiel der Erfindung anhand einer Zeichnung näher erläutert.

Es zeigen:
- Fig. 1: ein gattungsgemaß Getriebeschema eines mehrgängigen Lastschaltgetriebes mit hydrodynamischem Leistungspfad und

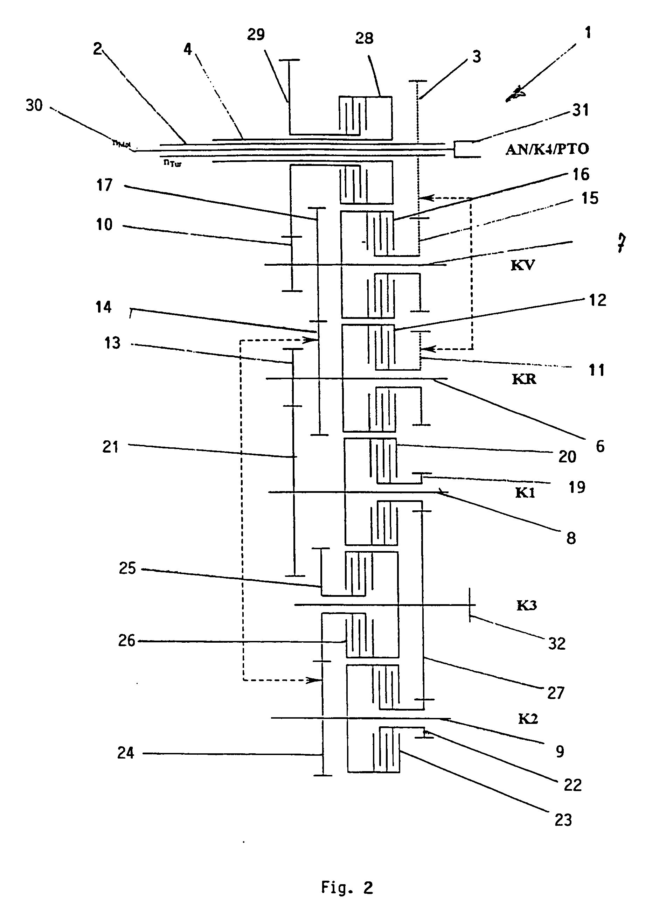

- Fig. 2: ein Getriebeschema eines mehrgängigen Lastschaltgetriebes mit hydrodynamischem und mechanischem Leistungspfad gemäß der vorliegenden Erfindung.

### Fig. 1:

Ein mehrgängiges Lastschaltgetriebe 1 weist als Antriebswelle eine Hohlwelle 2 mit einem Festrad 3 auf. Die Hohlwelle 2 wird von einem Turbinenabschnitt eines Drehmomentwandlers (nicht dargestellt) angetrieben und gehört zu einem hydrodynamischem Leistungspfad.

Das Lastschaltgetriebe 1 weist Vorgelegewellen 6, 7, 8 und 9 auf, auf denen jeweils Festräder, Losräder und Kupplungselemente angeordnet sind und mit diesen mehreren Vorgelegeeinheiten bilden. Die Vorgelegeeinheit für den Rückwärtsgang KR wird durch die Vorgelegewelle 6, das Losrad 11, das Kupplungselement 12 und die Festräder 13 und 14 gebildet. Die Vorgelegeeinheit für den Vorwärtsgang KV wird durch die Vorgelegewelle 7, das Losrad 15, das Kupplungselement 16 und die Festräder 10 und 17 gebildet. Die Vorgelegeeinheit für den 1. Gang K1 wird durch die Vorgelegewelle 8, das Losrad 19, das Kupplungselement 20 und das Festrad 21 gebildet. Die Vorgelegeeinheit für den zweiten Gang K2 wird durch die Vorgelegewelle 9, das Losrad 22, das Kupplungselement 23 und das Festrad 24 gebildet. Die Vorgelegeeinheit für den dritten Gang K3 wird durch die Abtriebswelle 32, das Losrad 25, das Kupplungselement 26 und das Festrad 27 gebildet.

Die K4-Vorgelegeeinheit hat Hohlwelle 2 als Vorgelegewelle, das Kupplungselement 28 und das entkoppelte Rad 29. Das entkoppelte Rad 29 kämmt mit dem Festrad 10 der Vorgelegeeinheit KV.

Von einem direkten Durchtrieb wird eine Zentralwelle 30 zu einem Nebenabtrieb 31 eines PTOs angetrieben.

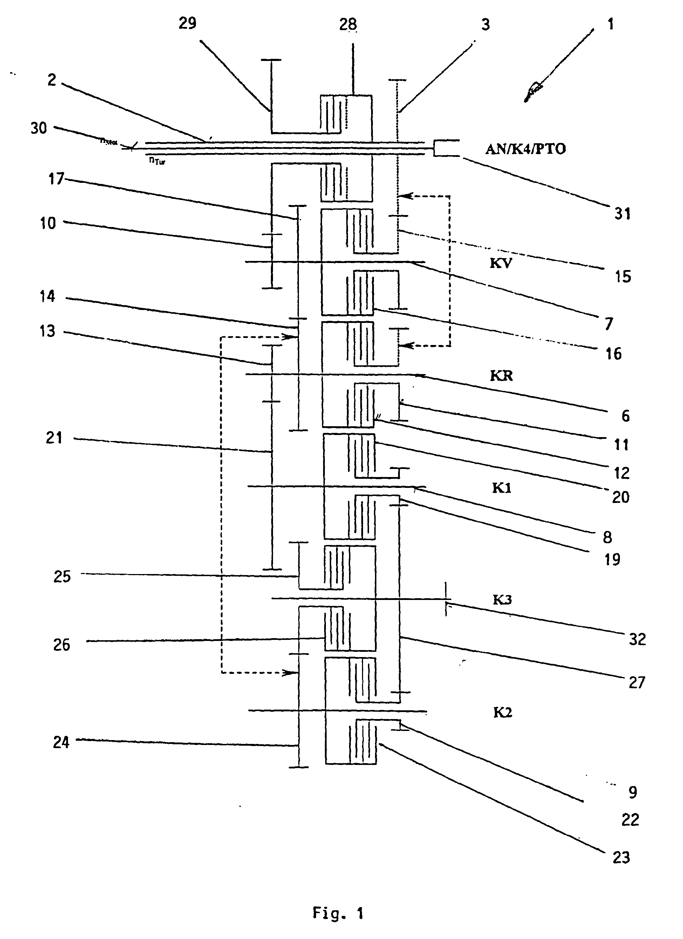

Die Funktionsweise der Zahnräder und Kupplungen zum Schalten der unterschiedlichen Gänge und der entsprechenden Kraftfluß sind dem Fachmann aus der Darstellung in Fig. 1 ohne weiteres verständlich. Daher soll hier nicht weiter darauf eingegangen werden.

### Fig. 2:

Entsprechende Merkmale werden mit den Bezugszeichen aus Fig. 1 bezeichnet. Ein mehrgängiges Lastschaltgetriebe 1 weist als Antriebswellen eine innere Hohlwelle 2 mit einem Festrad 3 und eine äußere Hohlwelle 4 auf. Die innere Hohlwelle 2 wird von einem Turbinenabschnitt eines Drehmomentwandlers (nicht dargestellt) angetrieben und gehört zu einem hydrodynamischem Leistungspfad und die äußere Hohlwelle 4 wird über den direkten Durchtrieb mit der Drehzahl eines Motors (nicht dargestellt) angetrieben und gehört zu einem mechanischem Leistungspfad.

Das Lastschaltgetriebe 1 weist Vorgelegewellen 6, 7, 8 und 9 auf, auf denen jeweils Festräder, Losräder und Kupplungselemente angeordnet sind und mit diesen mehreren Vorgelegeeinheiten bilden. Die Vorgelegeeinheit für den Rückwärtsgang KR wird durch die Vorgelegewelle 6, das Losrad 11, das Kupplungselement 12 und die Festräder 13 und 14 gebildet. Die Vorgelegeeinheit für den Vorwärtsgang KV wird durch die Vorgelegewelle 7, das Losrad 15, das Kupplungselement 16 und die Festräder 10 und 17 gebildet. Die Vorgelegeeinheit für den ersten Gang K1 wird durch die Vorgelegewelle 8, das Losrad 19, das Kupplungselement 20 und das Festrad 21 gebildet. Die Vorgelegeeinheit für den zweiten Gang K2 wird durch die Vorgelegewelle 9, das Losrad 22, das Kupplungselement 23 und das Festrad 24 gebildet. Die Vorgelegeeinheit für den dritten Gang K3 wird durch die Abtriebswelle 32, das Losrad 25, das Kupplungselement 26 und das Festrad 27 gebildet.

Die K4-Vorgelegeeinheit hat die äußere Hohlwelle 4 als Vorgelegewelle, das Kupplungselement 28 und das entkoppelte Rad 29. Das entkoppelte Rad 29 kämmt mit dem Festrad 10 der Vorgelegeeinheit KV.

Von einem direkten Durchtrieb wird eine Zentralwelle 30 zu einem Nebenabtrieb 31 eines PTO angetrieben.

Die Vorgelegeeinheiten KV und KR werden über den hydrodynamischen Leistungspfad betrieben. Die Unterschiede der Übersetzungen der Vorgelegeeinheiten K1, K2, K3 werden beim Betrieb über den optionalen mechanischen Leistungspfad von der Vorgelegeeinheit K4 unterteilt, so dass bei jedem Gangwechsel der Wechsel vom hydrodynamischem zum mechanischen Leistungspfad und umgekehrt erfolgt, wobei die Überschneidung zwischen den Übersetzungen des mechanischen und des hydrodynamischen Leistungspfads mit der Übersetzung der Vorgelegeeinheit K4 beliebig gewählt werden kann.

Die Vorgelegeeinheiten KV, KR und K4 bilden eine Wendegetriebeeinheit und die Vorgelegeeinheiten K1, K2 und K3 bilden eine Ganggetriebeeinheit, wobei die Vorgelegeeinheiten der Wendegetriebeeinheit an einer Seite neben den Antriebswellen 2, 4 vorgesehen sind und die Vorgelegeeinheiten der Ganggetriebeeinheit an die Vorgelegeeinheit KR des Rückwärtsgangs anschließen.

### Bezugszeichen

- 1: Lastschaltgetriebe
- 2: Antriebswelle
- 3: Festrad
- 4: Antriebswelle
- 5: -
- 6: Vorgelegewelle
- 7: Vorgelegewelle
- 8: Vorgelegewelle
- 9: Vorgelegewelle
- 10: Festrad
- 11: Losrad
- 12: Kupplungselement
- 13: Festrad
- 14: Festrad
- 15: Losrad
- 16: Kupplungselement
- 17: Festrad
- 19: Losrad
- 20: Kupplungselement
- 21: Festrad
- 22: Losrad
- 23: Kupplungselement
- 24: Festrad
- 25: Losrad
- 26: Kupplungselement
- 27: Festrad
- 28: Kupplungselement
- 29: entkoppeltes Rad
- 30: Zentralwelle
- 31: Nebenabtrieb
- 32: Abtriebswelle

- KV: Vorgelegeeinheit Vorwärtsgang
- KR: Vorgelegeeinheit Rückwärtsgang
- K1: Vorgelegeeinheit erster Gang
- K2: Vorgelegeeinheit zweiter Gang
- K3: Vorgelegeeinheit dritter Gang
- K4: Vorgelegeeinheit Splitter
- AN: Antriebswelle

## Patentansprüche

1. Lastschaltgetriebe (1) mit hydrodynamischem und mechanischem Leistungspfad, insbesondere ein solches mehrgängiges Lastschaltgetriebe als Wendegetriebe für Baumaschinen, mit mindestens zwei Antriebswellen (2, 4), wobei eine dieser Antriebswellen (2) mit einem Turbinenabschnitt eines Drehmomentwandlers und eine zweite Antriebswelle (4) über den direkten Durchtrieb mit der Drehzahl eines Motors verbunden ist, mindestens einer Abtriebswelle (32) und mehreren Vorgelegewellen (6, 7, 8 und 9) mit auf diesen verteilten Losrädern, Festrädern und Schaltkupplungen, die mehrere Vorgelegeeinheiten (KR, KV, K1, K2, K3) zur Gang- und Richtungsschaltung bilden, wobei einzelne Vorgelegewellen zu einer Wendegetriebeeinheit (KR, KV) und einzelne Vorgelegewellen und die Abriebswelle zu einer Ganggetriebeeinheit (K1, K2, K3) zusammengefasst sind, **dadurch gekennzeichnet dass** ein Gangsplitter (K4) die Gangsprünge der Ganggetriebeeinheit (K1 ,K2,K3) unterteilt, und der Gangsplitter (K4) koaxial auf den Antriebswellen (2, 4) angeordnet ist, und während des Betriebs der Schaltkupplung (28) des Gangsplitters (K4) der Turbinenabschnitt des Drehmomentwandlers von der Abtriebswelle (32) getrennt ist.

2. Lastschaltgetriebe (1) gemäß Anspruch 1, **dadurch gekennzeichnet, dass** koaxial zu den Antriebswellen (2, 4) ein Nebenabtrieb (31), beispielsweise ein PTO, vorgesehen ist.

3. Lastschaltgetriebe (1) gemäß Anspruch 1, **dadurch gekennzeichnet, dass** die Wendegetriebeeinheit an einer beliebigen Seite der Antriebswellen (2, 4) vorgesehen ist und die Ganggetriebeeinheit an die Wendegetriebeeinheit anschließt, so dass die Wendegetriebeeinheit und die Ganggetriebeeinheit, bezogen auf die Antriebswellen (2, 4), hintereinander auf einer Seite der Antriebswellen angeordnet sind.

4. Lastschaltgetriebe (1) nach einem der vorhergehenden Ansprüche, **dadurch gekennzeichnet, dass** an die Abtriebswelle (32) ein Achsverteilergetriebe anschließbar ist.

5. Lastschaltgetriebe (1) nach Anspruch 2, **dadurch gekennzeichnet, dass** der Nebenantrieb (31) motorabhängig ist.

## Claims

1. Powershift transmission (1) with hydrodynamic and mechanical path of performance, in particular such a multi-speed powershift transmission as a reversing gear for construction machinery with at least two input shafts (2, 4) whereas one of these input shafts (2) is connected to the turbine section of the torque converter and the second input shaft (4) is linked by means of a direct drive to the speed of the engine, at least to one output shaft (32), and several countershafts (6, 7, 8, and 9) as well as to the idler gears, fixed gears, and separating clutches distributed among those which create several countershaft units (KR, KV, K1, K2, K3) for a gear and direction shift system, whereas individual countershafts are summarized to a reversing gear unit (KR, KV) and individual countershafts and the input shaft are combined in a gear transmission unit (K1, K2, K3) which are **characterized in that** the gear splitter (K4) subdivides the gear leaps of the gear transmission unit (K1,K2,K3) and the gear splitter (K4) is allocated coaxially on the input shafts (2, 4) and that during operation of the shift dutch (28) of the gear splitter (K4), the turbine section of the torque converter is separated from the output shaft (32).

2. Powershift transmission (1) according to claim 1, **characterized in that** coaxially to the input shafts (2, 4), an auxiliary drive (31), for example a PTO, has been planned.

3. Powershift transmission (1) according to claim 1, **characterized in that** the reversing gear is designed for any given side of the input shafts (2, 4) and that the gear transmission unit is mounted next to the reversing gear unit so that the reserving gear unit and the gear transmission unit, in relation to the input shafts (2, 4), are arranged consecutively (back-to-back) at one side of the input shafts.

4. Powershift transmission (1) according to one of the preceding claims, **characterized in that** the output shaft (32) can be connected to the axle transfer case.

5. Powershift transmission (1) according to claim 2, **characterized in that** the power-take off (31) is an engine-dependent PTO.

## Revendications

1. Boîte de vitesses couplable sous charge (1) dotée d'un chemin de puissance hydrodynamique et d'un chemin de puissance mécanique. En particulier une boîte de vitesses couplable sous charge à plusieurs rapports pouvant être utilisée comme boîte d'inversion pour engins de travaux publics, étant dotée d'au moins deux arbres d'entrée (2, 4), sachant qu' un de ces arbres d'entrée (2) est relié à une partie de la turbine d'un convertisseur de couple et qu'un deuxième arbre d'entrée (4) est relié - par l'intermédiaire de la prise directe - à l'arbre du moteur, étant dotée d'au moins un arbre de sortie (32) et de plusieurs arbres intermédiaires (6, 7, 8 et 9), ceux-ci étant pourvus de pignons foux, pignons fixes et embrayages repartis sur ces arbres intermédiaires et formant plusieurs unités d'arbres intermédiaires (KR, KV, K1, K2, K3) pour le changement des vitesses et l'inversion du sens de marche, sachant que certains de ces arbres intermédiaires sont regroupés dans une unité de boîte d'inversion (KR, KV) et d'autres arbres intermédiaires et l'arbre de sortie sont regroupés dans une unité de boîte de vitesses à plusieurs rapports (K1, K2, K3), **caractérisée en ce que** un doubleur de gamme (K4) divise les sauts de rapports de l'unité de boîte de vitesses à plusieurs rapports (K1,K2,K3) et **en ce que** le doubleur de gamme (K4) est disposé coaxialement sur les arbres d'entrée (2, 4) et **en ce que** pendant l'actionnement de l'embrayage (28) du doubleur de gamme (K4) la partie de la turbine du convertisseur de couple est séparée de l'arbre de sortie (32).

2. Boîte de vitesses couplable sous charge (1) selon la revendication 1, **caractérisée en ce que** est prévue une prise de mouvement (31), celle-ci étant disposée coaxialement par rapport aux arbres d'entrée (2, 4).

3. Boîte de vitesses couplable sous charge (1) selon la revendication 1, **caractérisée en ce que** l'unité de boîte d'inversion est prévue sur un côté quelconque des arbres d'entrée (2, 4) et **en ce que** l'unité de boîte de vitesses à plusieurs rapports est rattachée à l'unité de boîte d'inversion, et cela de telle manière que l'unité de boîte d'inversion et l'unité de boîte de vitesses à plusieurs rapports sont disposées l'une après l'autre d'un côté des arbres d'entrée par rapport aux arbres d'entrée (2, 4).

4. Boîte de vitesses couplable sous charge (1) selon une des revendications précédentes, **caractérisée en ce que** à l'arbre d'entrée (32) peut être couplée une boîte-pont de transfert.

5. Boîte de vitesses couplable sous charge (1) selon la revendication 2, **caractérisée en ce que** la prise de mouvement (31) est dépendante du moteur.
